# EUROPÄISCHE PATENTANMELDUNG

(11) **EP 4 744 861 A1**
(43) Veröffentlichungstag der Anmeldung: **20.05.2026**
(21) Anmeldenummer: 25214930.7
(22) Anmeldetag: 11.11.2025
(51) Int. Cl.: B29C 49/42, B29C 49/10, B65G 47/52, B65G 51/03

(54) **VORRICHTUNG UND VERFAHREN ZUM TRANSPORTIEREN VON KUNSTSTOFFVORFORMLINGEN**

(30) Priorität: 13.11.2024 DE 102024133247
(71) Anmelder: Krones AG, 93073 Neutraubling (DE)
(72) Erfinder: Wünsche, Dieter, 93073 Neutraubling (DE); Beutl, Jürgen, 93073 Neutraubling (DE)
(74) Vertreter: Hannke Bittner & Partner mbB Regensburg

(57) **Zusammenfassung**

Vorrichtung (1) zum Transportieren von Kunststoffvorformlingen (10), welche einen Grundkörper (10a) und einen Mündungsbereich (10b) aufweisen mit einer ersten bezüglich einer ersten Drehachse (D1) drehbaren Rolle (2) und einer zweiten bezüglich einer zweiten Drehachse (D2) drehbaren Rolle (4), wobei die erste Drehachse (D1) und die zweite Drehachse (D2) parallel zueinander verlaufen und zwischen der ersten Rolle (2) und der zweiten Rollen (4) ein Spalt (Sp) ausgebildet ist, der derart dimensioniert ist,. dass durch diesen Spalt der Grundkörper (10a) treten kann und durch diesen Spalt (Sp) der Mündungsbereich (10b) nicht treten kann, wobei die Kunststoffvorformlinge (10) entlang dieses Spalts transportierbar sind und mit wenigstens einer Beaufschlagungseinrichtung (6,7), welche die Kunststoffvorformlinge mit einem gasförmigen Medium und insbesondere mit Luft beaufschlagt,
dadurch gekennzeichnet, dass
die Beaufschlagungseinrichtung (6, 7) derart angeordnet ist, dass sie die Kunststoffvorformling in deren Mündungsbereich (10b) mit dem gasförmigen Medium beaufschlagt.

## Beschreibung

Die vorliegende Erfindung bezieht sich auf eine Vorrichtung und ein Verfahren zum Transportieren von Kunststoffvorformlingen, welche zur Herstellung von Behältnissen dienen. Derartige Kunststoffvorformlinge werden im Stand der Technik üblicherweise eingesetzt, um von einer Umformungseinrichtung wie einer Streckblasmaschine zu Kunststoffflaschen umgeformt zu werden. Dabei werden üblicherweise diese Kunststoffvorformlinge ausgehend von einem ungeordneten Zustand, beispielsweise einem Silo zunächst ausgerichtet bzw. sortiert und dann transportiert. Eine gängige Methode diesen Vorgang durchzuführen sind sogenannte Rollensortierer.

Diese Rollensortierer weisen zwei parallel zueinander angeordnete Rollen auf, zwischen denen die Grundkörper der Kunststoffvorformlinge transportiert werden, insbesondere während diese Rollen sich drehen, wobei andere Bereiche der Kunststoffvorformlinge wie insbesondere deren Trageringe nicht durch den zwischen den Rollen gebildeten Spalt treten können.

Im Laufe der Zeit wurde stets versucht, die Durchsatzleistungen derartiger Anlagen zu erhöhen. Mittlerweile werden Durchsätze angestrebt, die bei 80000 - 100000 Kunststoffvorformlinge pro Stunde liegen. Es ist dabei aus dem internen Stand der Anmelderin eine Vorgehensweise bekannt, bei denen die Grundkörper der Kunststoffvorformlinge mit Druckluft beaufschlagt werden, um diese schneller zu bewegen.

In anderen Worten werden die Kunststoffvorformlinge in einem Garniturenbereich mit hohen Leistungen von unten mit Luft angeblasen. Diese Anblasung führt dazu, dass sich die angeblasenen Kunststoffvorformlinge mit dem Grundkörper nach vorne in Laufrichtung ausrichten. Dies kann wiederum zu vermehrten Störungen und beispielsweise einen Verkeilen der Kunststoffvorformlinge führen.

Aus der DE 2020 19 104 001 U1 ist eine Transportvorrichtung zum Transportieren von Kunststoffvorformlingen mit einer ersten Schienenführungseinrichtung und einer zweiten Schienenführungseinrichtung, welche sich in einer vorgegebenen Transportrichtung parallel zueinander und in einem vorgegebenen Abstand zueinander erstrecken, bekannt. Dabei sind benachbart zu den Schienenführungseinrichtungen und insbesondere oberhalb derselben Luftleiteinrichtungen ausgebildet.

Die EP 4 375 046 A1 beschreibt eine Transportvorrichtung zum Transport von Vorformlingen, mit einer sich entlang einer Förderrichtung erstreckenden Fördergasse wobei die Fördergasse eine Behälterführung mit einem sich in Förderrichtung erstreckenden Führungsschlitz aufweist und wobei eine erste Gruppe von oberhalb des Führungsschlitzes angeordneten Fluidkanälen vorgesehen ist, welche fluidwirkend mit der Fördergasse und dem zumindest einen Antriebskanal verbunden ist

Der vorliegenden Erfindung liegt daher die Aufgabe zugrunde, einen Transport und die hier beschriebene Ausrichtung bzw. Sortierung auch bei hohen Durchsatzleistungen und insbesondere mit reduzierter Störanfälligkeit zu erreichen. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Transportieren von Behältnissen und insbesondere von Kunststoffvorformlingen, welche einen Grundkörper und einen Mündungsbereich aufweisen, weist eine erste bezüglich einer ersten Drehachse drehbare Rolle auf und eine zweite bezüglich einer zweiten Drehachse drehbare Rolle, wobei die erste Drehachse und die zweite Drehachse parallel zueinander verlaufen.

Weiterhin ist zwischen der ersten Rolle und der zweiten Rolle ein Spalt ausgebildet, der derart dimensioniert ist, dass durch diesen Spalt der Grundkörper des Kunststoffvorformlings bzw. die Grundkörper der Kunststoffvorformlinge treten können und durch diesen Spalt der Mündungsabschnitt des oder die Mündungsabschnitte der Kunststoffvorformlinge nicht treten kann bzw. treten können.

Auf diese Weise wird bevorzugt erreicht, dass die Kunststoffvorformlinge, insbesondere an den Tragringen und/oder den Mündungsbereichen hängend transportiert werden.

Dabei sind die Kunststoffvorformlinge entlang dieses Spalt transportierbar und/oder werden entlang dieses Spaltes transportiert und es ist wenigstens eine Beaufschlagungseinrichtung vorgesehen, welche die Kunststoffvorformlinge mit einem gasförmigen Medium und insbesondere mit (Druck)luft beaufschlagt.

Bevorzugt dient dabei diese Druckluftbeaufschlagung dazu, dass die Kunststoffvorformlinge in eine bestimmte Richtung, insbesondere die Transportrichtung beschleunigt oder gedrängt werden.

Erfindungsgemäß ist die Beaufschlagungseinrichtung derart ausgebildet, dass sie die Kunststoffvorformlinge oder den Kunststoffvorformling, in dessen oder deren Mündungsbereich mit dem gasförmigen Medium beaufschlagt.

Bevorzugt ist die Beaufschlagungseinrichtung derart ausgebildet, dass sie zumindest untere Bereiche der Grundkörper der Kunststoffvorformlinge nicht mit dem gasförmigen Medium beaufschlagt. Unter einem unteren Bereich wird zumindest eine unteres Drittel der Grundkörper (bei einer vertikalen Ausrichtung mit der Mündung nach oben) verstanden, bevorzugt eine untere Hälfte der Grundkörper und besonders bevorzugt die unteren 2 Drittel der Grundkörper und bevorzugt die unteren drei Viertel der Grundkörper.

Bevorzugt weist die Vorrichtung eine erste Antriebseinrichtung auf, welche die erste Rolle zur Drehung bezüglich deren Drehachse antreibt. Bevorzugt weist die Vorrichtung eine zweite Antriebseinrichtung auf, welche die zweite Rolle zur Drehung bezüglich deren Drehachse antreibt. Bevorzugt sind die Drehung der ersten Rolle und die Drehung der zweiten Rolle aufeinander synchronisiert. Diese Synchronisierung kann dabei durch ein Getriebe oder auch durch eine elektronische Steuerung erfolgen. Bevorzugt handelt es sich bei der oder den Antriebsvorrichtungen um Elektromotoren und insbesondere um Servomotoren.

Bevorzugt werden die beiden Rollen in entgegengesetzten Drehrichtungen doch insbesondere mit der gleichen Drehgeschwindigkeit angetrieben. Bevorzugt weisen die beiden Rollen in ihrer Längsrichtung d.h. entlang deren Drehachse eine Länge auf, die größer ist als 20cm, bevorzugt größer als 40cm und besonders bevorzugt größer als 50cm, bevorzugt größer als 100cm, bevorzugt größer als 200cm, bevorzugt größer als 300cm und besonders größer als 400cm und besonders bevorzugt größer als 500cm.

Bevorzugt weisen die beiden Rollen in ihrer Längsrichtung d.h. entlang deren Drehachsen eine Länge auf, welche geringer ist als 900cm, bevorzugt geringer als 800cm, bevorzugt geringer als 750cm und besonders bevorzugt geringer als 700cm.

Es wird auf diese Weise erreicht, dass die Grundkörper der Kunststoffvorformlinge nicht nach vorne gedrängt werden und damit im Stand der Technik teilweise gegebene Gefahr eines Teilens reduziert ist. Bei einer weiteren bevorzugten Ausführungsform sind die drehbaren Rollen nahezu horizontal ausgerichtet. Besonders bevorzugt sind diese doch leicht geneigt, damit die Kunststoffvorformlinge auch durch die Hangabtriebskraft in ihre Transportrichtung gedrängt werden.

Bei einer weiteren bevorzugten Ausführungsform weisen die beiden Rollen den gleichen Rollendurchmesser auf.

Besonders bevorzugt ist dieser Durchmesser größer als 2cm, bevorzugt größer als 4cm, bevorzugt größer als 6cm. Bevorzugt ist dieser Durchmesser kleiner als 50cm, bevorzugt kleiner als 40cm, bevorzugt kleiner als 30cm, bevorzugt kleiner als 25cm, bevorzugt kleiner als 20cm und besonders bevorzugt kleiner als 15cm und besonders bevorzugt kleiner als 10cm und besonders bevorzugt kleiner als 8cm.

Diese Abmessungen der Rollen haben sich als besonders vorteilhaft erwiesen, um einen hohen Durchsatz bzw. hohe Förderleistungen zu ermöglichen.

Besonders bevorzugt weisen die Rollen an ihrer Außenoberfläche, welche den zu transportierenden Kunststoffvorformlingen zugewandt ist, eine Beschichtung auf und insbesondere eine Beschichtung, welche ein Gleiten der Kunststoffvorformlinge entlang des Spalts fördert.

Besonders bevorzugt sind wenigstens zwei Beaufschlagungseinrichtungen in der Transportrichtung der Kunststoffvorformlinge hintereinander angeordnet. Bevorzugt sind diese beiden Beaufschlagungseinrichtungen dabei unmittelbar hintereinander angeordnet.

Bei einer weiteren bevorzugten Ausführungsform ist die wenigstens eine Beaufschlagungseinrichtung derart angeordnet, dass das aus der Beaufschlagungseinrichtung austretende gasförmige Medium zumindest auch in der Transportrichtung der Kunststoffvorformlinge austritt.

Besonders bevorzugt drängt das gasförmige Medium die Kunststoffvorformlinge in deren Transportrichtung und beschleunigt auf diese Weise bevorzugt diese Bewegung der Kunststoffvorformlinge in der Transportrichtung.

Bevorzugt erstreckt sich daher eine Hauptströmungsrichtung der aus der Beaufschlagungseinrichtung austretenden Luft zumindest auch in der Transportrichtung der Kunststoffvorformlinge.

Bei einer bevorzugten Ausführungsform weist die Beaufschlagungseinrichtung eine Vielzahl von Austrittsöffnungen für das gasförmige Medium auf, durch welche das gasförmige Medium auf die Kunststoffvorformlinge leitbar ist.

Bevorzugt erstreckt sich diese Vielzahl der Austrittsöffnungen entlang der Transportrichtung der Kunststoffvorformlinge.

Bevorzugt ist ein minimaler Abstand zwischen den einzelnen Kunststoffvorformlingen und insbesondere deren Mündungsbereichen und den jeweiligen Austrittsöffnungen kleiner als 10cm, bevorzugt kleiner als 8cm, bevorzugt kleiner als 6cm, bevorzugt kleiner als 5cm, bevorzugt kleiner als 4cm, besonders bevorzugt kleiner als 3cm und besonders bevorzugt kleiner als 2,5cm und besonders bevorzugt kleiner als 2,0cm und besonders bevorzugt kleiner als 1,5cm.

Bevorzugt ist ein minimaler Abstand zwischen den einzelnen Kunststoffvorformlingen und insbesondere deren Mündungsbereichen und den jeweiligen Austrittsöffnungen größer als 0,1cm, bevorzugt größer als 0,2cm, bevorzugt größer als 0,3cm, bevorzugt größer als 0,4cm, besonders bevorzugt größer als 0,5cm.

Durch diese Dimensionen des Abstandes kann eine besonders energieeffiziente Beaufschlagung der Kunststoffvorformlinge erreicht werden.

Bevorzugt sind dabei diese Austrittsöffnungen schräg gestellt und besonders bevorzugt derart schräg gestellt, dass durch diese hindurch das gasförmige Medium zumindest auch in der Transportrichtung der Kunststoffvorformlinge austritt.

Besonders bevorzugt weisen die Austrittsöffnungen eine Polygonale Gestalt auf. Bevorzugt weisen die Öffnungen einen rechteckigen Querschnitt auf. Bevorzugt weisen die Öffnungen eine Längenerstreckung auf, die zwischen 5mm und 9mm, bevorzugt zwischen 6mm und 8mm liegt. Besonders bevorzugt weisen die Öffnungen eine Breitenerstreckung auf, die zwischen 1mm und 5mm, bevorzugt zwischen 1mm und 3mm liegt.

Bevorzugt liegt ein Austrittswinkel der Austrittsöffnungen zwischen 10° und 50°, bevorzugt zwischen 15° und 45°, bevorzugt zwischen 20° und 40° und besonders bevorzugt zwischen 20° und 30^°

Besonders bevorzugt sind die Austrittsöffnungen beidseits der jeweiligen Mündungen bzw. Mündungsabschnitten der Kunststoffvorformlinge angeordnet. Unter der Mündungen bzw. Mündungabschnitte werden diejenigen Abschnitte der Kunststoffvorformlinge verstanden, welche den eigentlichen Mündungsbereich aufweisen, daneben aber auch diejenigen Bereiche, in welchen sich die (Außen)gewinde der Kunststoffvorformlinge und bevorzugt auch die jeweiligen Tragringe befinden.

Besonders bevorzugt handelt es sich hierbei um eine Vielzahl von bevorzugt im wesentlichen gleichartigen Öffnungen. Besonders bevorzugt ist die Anzahl dieser Austrittsöffnungen (bei einer der Beaufschlagungseinrichtungen) größer als 4, bevorzugt größer als 6, bevorzugt größer als 8, bevorzugt größer als 10 und bevorzugt größer als 12 und bevorzugt größer als 16 und besonders bevorzugt größer als 20.

Besonders bevorzugt ist die Anzahl dieser Austrittsöffnungen kleiner als 300, bevorzugt kleiner als 250, bevorzugt kleiner als 200, bevorzugt kleiner als 150 und besonders bevorzugt kleiner als 100 und besonders bevorzugt kleiner 80.

Besonders bevorzugt sind die Austrittsöffnungen kiemenartig ausgebildet. So kann beispielsweise eine Vielzahl von zueinander parallelen Spalten vorgesehen sein.

Besonders bevorzugt erstreckt sich ein Bereich, in dem die Austrittsöffnungen angeordnet sind in der Transportrichtung der Kunststoffvorformlinge. Besonders bevorzugt ist dieser Bereich länger als 3 cm bevorzugt länger als 4 cm bevorzugt länger als 5 cm und bevorzugt länger als 6 cm. Bevorzugt ist der Bereich, in dem die Austrittsöffnungen angeordnet sind. kürzer als 40 cm, bevorzugt kürzer als 35 cm, bevorzugt kürzer als 30 cm und besonders bevorzugt kürzer als 25 cm.

Bei einer weiteren bevorzugten Ausführungsform ist die Beaufschlagungseinrichtung wenigstens abschnittsweise oberhalb der ersten Rolle und der zweiten Rolle angeordnet. Auf diese Weise ist eine besonders effiziente Beaufschlagung gerade der Mündungsbereiche der Kunststoffvorformlinge möglich.

Besonders ist wenigstens ein der beiden Beaufschlagungseinrichtungen und sind bevorzugt beide Beaufschlagungseinrichtungen vollständig oberhalb der beiden Rollen und/oder oberhalb der transportierten Kunststoffvorformlinge angeordnet.

Besonders bevorzugt ist wenigstens eine Beaufschlagungseinrichtung bezogen auf die Transportrichtung der Kunststoffvorformlinge in einem Endabschnitt der Rollen angeordnet

Bevorzugt ist wenigstens eine Beaufschlagungseinrichtung in einem Übergangsbereich zwischen den Rollen und einer sich an die Rollen anschließenden weiteren Transporteinrichtung zum Transportieren der Kunststoffvorformlinge angeordnet.

Besonders bevorzugt ist die Beaufschlagungseinrichtung auch oberhalb des zwischen den rollen ausgebildeten Spalts angeordnet.

Besonders bevorzugt ist die Beaufschlagungseinrichtung symmetrisch bezüglich den beiden Rollen bzw. des zwischen den Rollen ausgebildeten Spalts ausgebildet.

Bei einer weiteren bevorzugten Ausführungsform weist die Beaufschlagungseinrichtung einen Sammelraum (für das zur Beaufschlagung dienende gasförmige Medium) auf, der zum Sammeln des gasförmigen Mediums dient, wobei bevorzugt das gasförmige Medium von diesem Sammelraum zu den oben erwähnten einzelnen Austrittsöffnungen gelangen kann. Dieser Sammelraum kann dabei mit einer Druckluftquelle verbunden werden. Besonders bevorzugt sind die Austrittsöffnungen in einer der Sammelraum begrenzenden Wandung ausgebildet.

Besonders bevorzugt liegt der Druck einer (insbesondere zu dem Sammelraum) zugeführten Druckluft in einem Bereich zwischen.0,1bar und 2bar, bevorzugt zwischen 0,1bar und 1,5bar, bevorzugt zwischen 0,1bar und 1,0bar und bevorzugt zwischen 0,3bar und 1,0bar

Es ist dabei möglich, dass in diesem Bereich bereits als Druckluft sterile Luft verwendet wird, um eine weitere Verkeimung der Kunststoffvorformlinge durch die Beaufschlagung mit der Druckluft zu vermeiden.

Bei einer weiteren bevorzugten Ausführungsform weist die Vorrichtung eine oberhalb der Rollen angeordnete Niederhaltereinrichtung auf, welche dazu geeignet und bestimmt ist, ein Austreten der Kunststoffvorformlinge aus dem Spalt nach oben zu verhindern.

Besonders bevorzugt ist die Beaufschlagungseinrichtung an dieser Niederhaltereinrichtung ausgebildet. So kann beispielsweise der oben erwähnte Sammelraum auch Bestandteil der Niederhaltereinrichtung sein.

Bei einer weiteren bevorzugten Ausführungsform weist die Vorrichtung eine Führungszunge zum Führen der transportierten Kunststoffvorformlinge auf. Besonders bevorzugt ist eine Beaufschlagungseinrichtung an dieser Führungszunge angeordnet.

Bevorzugt sind die beiden hier beschriebenen Beaufschlagungseinrichtungen vorgesehen, nämlich eine an der besagten Führungszunge und eine an der besagten Niederhaltereinrichtungen. [Bitte kurz die Funktion der Führungszunge beschreiben].

Insgesamt wird auf diese Weise eine Anpassung insbesondere mit Kiemenausprägung an einem Halter installiert, welcher die Kunststoffvorformlinge im Mündungsbereich anbläst. Daneben ist bevorzugt auch ein Luftaustritt mit Kiemenausprägung der an Führungszunge installiert, welche die Kunststoffvorformlinge im Mündungsbereich anbläst.

Bei einer weiteren vorteilhaften Ausführungsform weist die Vorrichtung eine Auswerferinrichtung auf, welche dazu geeignet und bestimmt ist, fehlerhaft orientierte Kunststoffvorformlinge auszuwerfen. Besonders bevorzugt ist die wenigstens eine Beaufschlagungseinrichtung in der Transporteinrichtung der Kunststoffvorformlinge nach dieser Auswerfereinrichtung angeordnet.

Bei einer bevorzugten Ausführungsform ist die Auswurfeinrichtung oberhalb der beiden Rollen angeordnet. Besonders bevorzugt weist die Auswerfereinrichtung ein drehbares Rad auf, welches oberhalb der Rollen, und insbesondere auch oberhalb des besagten Spalts angeordnet ist.

Besonders bevorzugt ist eine Drehachse dieses Rades senkrecht zu einer Drehachse der Rollen ausgerichtet.

Die vorliegende Erfindung ist weiterhin auf ein Verfahren zum Transportieren von Kunststoffvorformlingen gerichtet, wobei die Kunststoffvorformlinge einen Grundkörper und einen Mündungsbereich aufweisen und wobei eine erste sich bezüglich einer ersten Drehachse drehende Rolle und eine zweite sich bezüglich einer zweiten Drehachse drehende Rolle vorgesehen ist, wobei die erste Drehachse und die zweite Drehachse parallel zueinander verlaufen und wobei zwischen der ersten Rolle und der zweiten Rolle ein Spalt ausgebildet wird, der derart dimensioniert ist, dass durch diesen Spalt, der Grundkörper (der Kunststoffvorformlinge) tritt und durch diesen Spalt der Mündungsbereich der Kunststoffvorformlinge nicht tritt, wobei die Kunststoffvorformlinge entlang dieses Spalts transportiert werden. Weiterhin ist eine Beaufschlagungseinrichtung vorgesehen, welche die Kunststoffvorformlinge mit einem gasförmigen Medium und insbesondere mit Luft beaufschlagt.

Dabei verläuft bevorzugt eine Strömungsrichtung dieser Luft wenigstens teilweise und bevorzugt in einer bzw. der Transportrichtung der Kunststoffvorformlinge.

Erfindungsgemäß ist die Beaufschlagungseinrichtung derart angeordnet, dass sie die Kunststoffvorformlinge in der Mündungsbereich und bevorzugt im wesentlichen ausschließlich in deren Mündungsbereich mit dem gasförmigen Medium beaufschlagt.

Bevorzugt ist die Beaufschlagungseinrichtung derart angeordnet, dass Sie eine Außenwand der Kunststoffvorformlinge in deren Mündungsbereich mit dem gasförmigen Medium beaufschlagt. So kann insbesondere ein Gewindebereich der Kunststoffvorformlinge mit dem gasförmigen Medium beaufschlagt werden.

Bevorzugt liegen dabei Strömungsgeschwindigkeiten der Luft zwischen 5km/h und 300km/h, bevorzugt zwischen 5km/h und 200km/h und besonders bevorzugt zwischen 20km/h und 160km/h.

Weitere Vorteile und Ausführungsformen ergeben sich aus den beigefügten Zeichnungen:

### Darin zeigen:

- Fig. 1a,b: zwei Teildarstellungen einer erfindungsgemäßen Vorrichtung;
- Fig. 2: eine Detaildarstellung der in Fig. 1 gezeigten Vorrichtung; und
- Fig. 3: eine weitere Detaildarstellung der Figur eins gezeigten Vorrichtung.

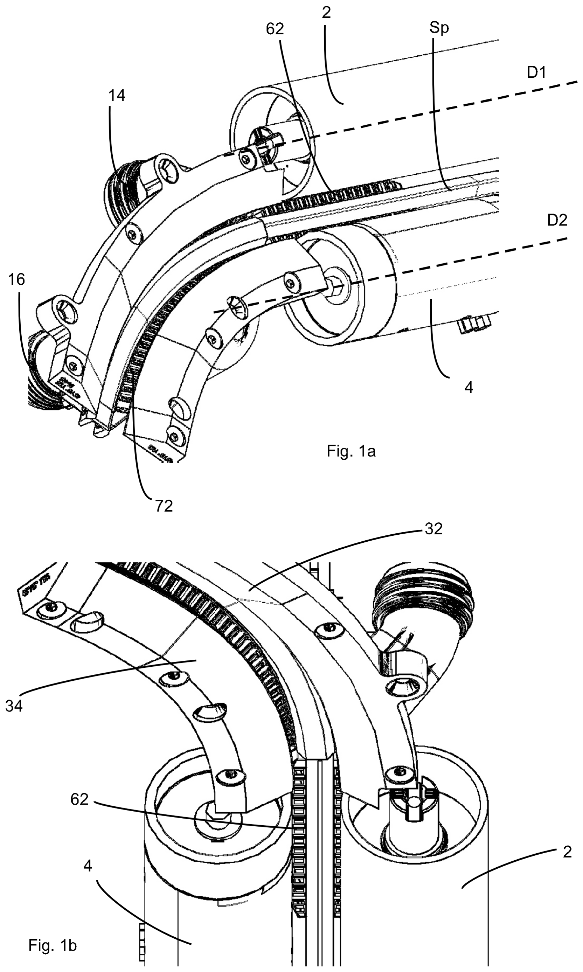

Fig. 1a,b zeigen zwei teilweise Darstellungen einer erfindungsgemäßen Vorrichtung. Diese Vorrichtung weist eine erste bezüglich einer ersten Drehachse D1 drehbare Rolle 2 und eine zweite bezüglich einer zweiten Drehachse D2 drehbare Rolle auf. Zwischen diesen beiden Rollen 2 und 4 ist ein Spalt ausgebildet, in welchem die Grundkörper der Kunststoffvorformlinge (nicht gezeigt) transportiert werden.

Das Bezugszeichen 62 kennzeichnet erste Austrittsöffnungen, welche hier oberhalb der beiden Rollen 2, 4 angeordnet sind und welche zum Fördern der Kunststoffvorformlinge dienen.

Das Bezugszeichen 72 kennzeichnet zweite Austrittsöffnungen, welche hier ebenfalls oberhalb der zu transportierenden Kunststoffvorformlingen jedoch insbesondere noch vor den beiden Rollen 2, 4 angeordnet sind.

Die Bezugszeichen 32 und 34 kennzeichnen Führungsschienen, welche zum Führen der Kunststoffvorformlinge (nicht gezeigt) dienen. Bevorzugt enden die oberen Kanten dieser Führungsschienen derart, dass die Kunststoffvorformling auf der richtigen Höhe an den Spalt zwischen den beiden Rollen 2 und 4 übergeben werden können.

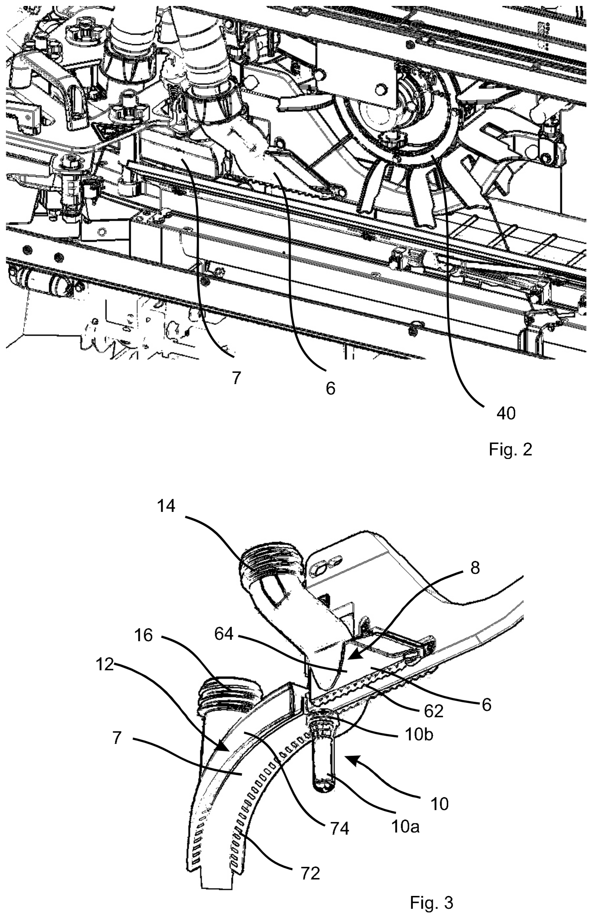

Fig. 2 zeigt eine Detaildarstellung der in Fig. 1 gezeigten Vorrichtung. Dabei ist eine erste Beaufschlagungseinrichtung 6 und eine zweite Beaufschlagungseinrichtung 7 vorgesehen. Diese sind bevorzugt in der Transportrichtung der Kunststoffvorformlinge hintereinander angeordnet. Beide dienen dazu, die (nicht gezeigten) Kunststoffvorformlinge in der Transportrichtung T zu transportieren bzw. zu drängen.

Fig. 3 zeigt eine Detaildarstellung der Beaufschlagungseinrichtungen 6,7. Man erkennt wieder die erste Beaufschlagungseinrichtung 6 und zweite Beaufschlagungseinrichtung 7. Diese dienen dazu, einen Kunststoffvorformling 10, der einen Grundkörper 10a und einen Mündungsbereich 10b aufweist, mit Druckluft zu beaufschlagen, sodass dieser in der Transportrichtung T schneller bewegt wird.

Das Bezugszeichen 8 kennzeichnet eine Niederhaltereinrichtung, an der eine Vielzahl von Austrittsöffnungen 62 ausgebildet ist, durch welche die Luft austreten kann, um die Kunststoffvorformlinge zu beaufschlagen. Die Beaufschlagungseinrichtung 6 bildet einen Sammelraum 64 zum Aufnehmen der Luft aus, welche zum Beaufschlagen der Kunststoffvorformlinge dient. Auch die Beaufschlagungseinrichtung 7 bildet einen Sammelraum zum Sammeln der zum Beaufschlagen der Kunststoffvorformlingen dienenden Luft aus.

Auch an der Einrichtung 12, bei der es sich um eine Führungszunge handelt, ist eine Vielzahl von Austrittsöffnungen 72 vorgesehen. Auch diese sind kiemenartig ausgebildet und bewirken, dass die Kunststoffvorformlinge mit Druckluft in der Transportrichtung beaufschlagt werden.

Die Bezugszeichen 14 und 16 kennzeichnen Anschlüsse, über welche in den Beaufschlagungseinrichtungen sechs und sieben jeweils Druckluft zu führen ist. Das Bezugszeichen 40 kennzeichnet eine optionale Auswerfereinrichtung, welche zum Auswerfen von insbesondere falsch orientierten oder fehlerhaften Kunststoffvorformlingen geeignet und bestimmt ist.

Es wird darauf hingewiesen, dass sämtliche Merkmale, welche unter Bezugnahme auf das Verfahren beschrieben wurden, in entsprechender Weise auch für die Vorrichtung offenbart sind, was insbesondere bedeutet, dass die entsprechende Vorrichtung Einrichtungen aufweist, welche zur Durchführung der jeweiligen Verfahren geeignet und bestimmt sind. Weiterhin sind auch Merkmale, welche unter Bezugnahme auf die Vorrichtung beschrieben wurden entsprechend für das oder die Verfahren anwendbar. Dies bedeutet, dass die Verfahren unter Verwendung der entsprechenden Vorrichtungsmerkmale ausgeführt werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Transportieren von Kunststoffvorformlingen (10), welche einen Grundkörper (10a) und einen Mündungsbereich (10b) aufweisen mit einer ersten bezüglich einer ersten Drehachse (D1) drehbaren Rolle (2) und einer zweiten bezüglich einer zweiten Drehachse (D2) drehbaren Rolle (4), wobei die erste Drehachse (D1) und die zweite Drehachse (D2) parallel zueinander verlaufen und zwischen der ersten Rolle (2) und der zweiten Rollen (4) ein Spalt (Sp) ausgebildet ist, der derart dimensioniert ist, dass durch diesen Spalt der Grundkörper (10a) treten kann und durch diesen Spalt (Sp) der Mündungsbereich (10b) nicht treten kann, wobei die Kunststoffvorformlinge (10) entlang dieses Spalts transportierbar sind und mit wenigstens einer Beaufschlagungseinrichtung (6,7), welche die Kunststoffvorformlinge mit einem gasförmigen Medium und insbesondere mit Luft beaufschlagt,
**dadurch gekennzeichnet, dass**
die Beaufschlagungseinrichtung (6) derart angeordnet ist, dass sie die Kunststoffvorformlinge in deren Mündungsbereich (10b) mit dem gasförmigen Medium beaufschlagt.

2. Vorrichtung nach Anspruch (1),
**dadurch gekennzeichnet, dass**
die Beaufschlagungseinrichtung (6,7) derart angeordnet ist, dass das aus der Beaufschlagungseinrichtung austretende gasförmige Medium zumindest auch in der Transportrichtung der Kunststoffvorformlinge austritt.

3. Vorrichtung (1) nach wenigstens einem der vorangegangenen Ansprüche,
**dadurch gekennzeichnet, dass**
die Beaufschlagungseinrichtung (6,7) eine Vielzahl von Austrittsöffnungen (62, 72) für das gasförmige Medium aufweist, durch welche das gasförmige Medium auf die Kunststoffvorformlinge (10) leitbar ist.

4. Vorrichtung (1) nach dem vorangegangenen Anspruch,
**dadurch gekennzeichnet, dass**
die Austrittsöffnungen kiemenartig ausgeprägt sind.

5. Vorrichtung (1) nach wenigstens einem der vorangegangenen Ansprüche,
**dadurch gekennzeichnet, dass**
die Beaufschlagungseinrichtung (6,7) wenigstens abschnittsweise oberhalb der ersten Rolle (2) und der zweiten Rolle (4) angeordnet ist und/oder die Beaufschlagungseinrichtung (6,7) bezogen auf die Transportrichtung der Kunststoffvorformlinge in einem Endabschnitt der Rollen (2, 4) angeordnet ist.

6. Vorrichtung (1) nach wenigstens einem der vorangegangenen Ansprüche,
**dadurch gekennzeichnet, dass**
die Beaufschlagungseinrichtung (6,7) einen Sammelraum (64,74) zum Sammeln des gasförmigen Mediums aufweist und bevorzugt das gasförmige Medium unmittelbar von diesem Sammelraum (64,74) zu den Austrittsöffnungen (62,72) gelangen kann.

7. Vorrichtung (1) nach wenigstens einem der vorangegangenen Ansprüche,
**dadurch gekennzeichnet, dass**
die Vorrichtung (1) eine oberhalb der Rollen (2, 4) angeordnete Niederhaltereinrichtung (8) aufweist, welche dazu geeignet und bestimmt ist, ein austreten der Kunststoffvorformlinge aus dem Spalt (Sp) zu verhindern und bevorzugt die Beaufschlagungseinrichtung (6) an dieser Niederhaltereinrichtung (8) ausgebildet ist.

8. Vorrichtung (1) nach wenigstens einem der vorangegangenen Ansprüche,
**dadurch gekennzeichnet, dass**
die Vorrichtung (1) eine Führungszunge (12) zum Führen der transportierten Kunststoffvorformlinge (10) aufweist und bevorzugt die Beaufschlagungseinrichtung (6) an dieser Führungszunge angeordnet ist.

9. Vorrichtung (1) nach wenigstens einem der vorangegangenen Ansprüche,
**dadurch gekennzeichnet, dass**
die Vorrichtung (1) eine Auswerfereinrichtung (40) aufweist, welche dazu geeignet und bestimmt ist, fehlerhaft orientierte Kunststoffvorformlinge (10) auszuwerfen und bevorzugt die oder wenigstens eine Beaufschlagungseinrichtung in der Transportrichtung der Kunststoffvorformlinge nach dieser Auswerfereinrichtung angeordnet ist.

10. Verfahren zum Transportieren von Kunststoffvorformlingen (10), welche einen Grundkörper (10a) und einen Mündungsbereich (10b) aufweisen wobei eine erste sich bezüglich einer ersten Drehachse (D1) drehende Rolle (2) und eine zweite bezüglich einer zweiten Drehachse (D2) drehende Rolle (4) vorgesehen ist, wobei die erste Drehachse (D1) und die zweite Drehachse (D2) parallel zueinander verlaufen und zwischen der ersten Rolle (2) und der zweiten Rolle (4) ein Spalt (Sp) ausgebildet wird, der derart dimensioniert ist, dass durch diesen Spalt der Grundkörper (10a) tritt und durch diesen der Mündungsbereich (10b) nicht tritt, wobei die Kunststoffvorformlinge (10) entlang dieses Spalts (Sp) transportiert werden und wenigstens eine Beaufschlagungseinrichtung (6,7) die Kunststoffvorformlinge mit einem gasförmigen Medium und insbesondere mit Luft beaufschlagt,
**dadurch gekennzeichnet, dass**
die Beaufschlagungseinrichtung (6,7) derart angeordnet ist, dass sie die Kunststoffvorformling in deren Mündungsbereich mit dem gasförmigen Medium beaufschlagt.
